# EUROPÄISCHE PATENTSCHRIFT

(11) **EP 2 363 253 B1**
(45) Veröffentlichungstag und Bekanntmachung des Hinweises auf die Patenterteilung: **15.11.2017**
(21) Anmeldenummer: 11156538.8
(22) Anmeldetag: 02.03.2011
(51) Int. Cl.: B25J 15/02, F16B 31/02, B23Q 3/10, B25B 1/10, B25B 1/08, B25B 5/08, B25B 5/14, B23B 31/177

(54) **Spanner oder -greifer**
Clamp or gripper
Tendeur ou poignée

(30) Priorität: 03.03.2010 DE 102010010238
(43) Veröffentlichungstag der Anmeldung: 07.09.2011
(73) Patentinhaber: Schunk GmbH & Co. KG Spann- und Greiftechnik, 74348 Lauffen am Neckar (DE)
(72) Erfinder: Schräder, Philipp, 88512 Mengen (DE); Wäscher, Tobias, 88374 Hosskirch (DE)
(74) Vertreter: DREISS Patentanwälte PartG mbB

(56) Entgegenhaltungen:
- DE-A1- 10 120 939
- GB-A- 958 749
- US-A- 3 370 213
- US-A1- 2010 013 137

## Beschreibung

Die Erfindung betrifft einen Spanner oder Greifer, der im Oberbegriff des Anspruchs 1 definiert ist. Derartige Spanner oder Greifer sind in vielfältiger Art und Weise und beispielsweise aus der DE 101 20 939 A1 bekannt. Sie finden insbesondere Verwendung, um zu bearbeitende Werkstücke zu spannen oder zu greifen, insbesondere während deren Bearbeitung. Die Spanner oder Greifer können dabei an einer Spindel angeordnet sein, beispielsweise als Teil einer Drehmaschine. Die Zentrischgreifer können aber auch stationär angeordnet sein, beispielsweise um Werkstücke zu spannen, welche dann mittels rotierenden Bearbeitungswerkzeugen, wie Bohrern oder Fräsern, bearbeitet werden.
Aus der DE 101 20 939 A1 ist eine Greifvorrichtung bekannt, die über einen im Greifergehäuse vorgesehenen Elektromotor angetrieben wird. Aus der GB 958,749 A ist eine Greifzange bekannt, bei der durch Verdrehen einer Spindel Greifbacken bewegt werden.
Der vorliegenden Erfindung liegt die Aufgabe zugrunde, einen Spanner oder Greifer bereitzustellen, mit dem ein exakt reproduzierbares Spannen von Werkstücken möglich ist. Der Spanner oder Greifer soll dabei einen möglichst einfachen Aufbau aufweisen und auch auf einfache Art und Weise betätigbar sein.

Diese Aufgabe wird mit einem Spanner oder Greifer gemäß dem Patentanspruch 1 gelöst. Die Anordnung ist insbesondere so, dass beim Verdrehen des Betätigungskörpers der Drehkörper ohne axiale Verlagerung verdreht wird und dass dadurch das Stellglied rotationsstarr axial verlagert wird, so dass sich die Backen entsprechend bewegen. Eine eingeleitete Rotationsbewegung wird folglich vom Betätigungskörper auf den Drehkörper übertragen, welcher dann die Drehbewegung in eine Axialbewegung umsetzt, welche wiederum in eine Linear- oder Radialbewegung der Backen umgesetzt wird. Insgesamt ergeben sich hierdurch eine vergleichsweise kompakte Bauform sowie eine große Steifigkeit des Systems. Ferner können große Spannkräfte erzeugt werden, insbesondere mit kleinem Antriebsmoment. Dies dann, wenn die Übersetzungsverhältnisse entsprechend gewählt werden. Ferner ergibt sich aufgrund der direkten Bewegungskopplung der einzelnen Bauteile eine sehr gute Zentrier- und Wiederholgenauigkeit.

Bei dem Getriebe, welches zwischen den Backen und dem Stellglied vorgesehen ist, kann es sich insbesondere um ein Keilhakengetriebe beziehungsweise um einen bekannten Schrägzug handeln.

Der Betätigungskörper kann insbesondere einen betätigbaren Eingriffsabschnitt und einen mit dem Drehkörper zusammenwirkenden Koppelabschnitt aufweisen. Der Eingriffsabschnitt kann insbesondere als Innensechskant oder Kreuzschlitz zum Zusammenwirken mit entsprechend komplementär ausgebildeten manuellen oder maschinellen Werkzeugen sein.

Der Betätigungskörper kann insbesondere als Drehstift ausgebildet sein und insbesondere in einer Lagerhülse drehbar gelagert angeordnet sein. Die Lagerhülse kann insbesondere einen Kragenabschnitt aufweisen, welches beispielsweise mittels Schrauben am Gehäuse befestigt ist. Hierdurch ergibt sich eine vergleichsweise exakte Lagerung des Betätigungskörpers.

Ferner ist denkbar, dass der Eingriffsabschnitt als Schnittstelle für ein Werkzeug oder manuell betätigbare Motorschrauber ausgebildet ist.

Der Drehkörper seinerseits kann eine Reibfläche aufweisen. Der Betätigungskörper weist dann seinerseits eine mit der Reibfläche drehgekoppelte Gegenreibfläche auf.

Entsprechend ist denkbar, dass der Drehkörper eine Verzahnung und der Betätigungskörper eine mit der Verzahnung im Eingriff stehende Gegenverzahnung aufweist.

Besonders vorteilhaft ist, wenn der Drehkörper an seinem Außenumfang kegelrad- oder kronenradförmig ausgebildet ist und wenn der Betätigungskörper einen Ritzelabschnitt zum Eingriff des kegelrad- oder kronenradförmig ausgebildeten Außenumfangs aufweist. Über eine entsprechende Anzahl der jeweiligen Zähne am Drehkörper und am Betätigungskörper können entsprechend geeignete Übersetzungsverhältnisse bereitgestellt werden.

Insbesondere ist in diesem Zusammenhang vorteilhaft, wenn die Übersetzung zwischen Betätigungskörper und Drehkörper und/oder zwischen Drehkörper und Stellglied und/oder zwischen Stellglied und Backen derart gewählt ist, dass zur Erzielung großer Spannkräfte an den Backen der Betätigungskörper mit einem geringen Drehmoment verdrehbar ist.

Bei einer weiteren vorteilhaften Ausgestaltung der Erfindung ist vorgesehen, dass das Stellgliedgewinde als Außengewinde ausgebildet ist und dass das Drehkörpergewinde als um die Mittellängsachse des Stellgliedgewindes verlaufendes Innengewinde ausgebildet ist. Bei einer derartigen Ausbildung ist insbesondere dann vorteilhaft, wenn der Drehkörper als Tellerrad oder Kronenrad ausgebildet ist.

Weitere Einzelheiten und vorteilhafte Ausgestaltungen der Erfindung sind der nachfolgenden Beschreibung zu entnehmen, anhand derer das in den Figuren dargestellte Ausführungsbeispiel der Erfindung näher beschrieben und erläutert ist.

Es zeigen:
- Figur 1: die Außenansicht eines erfindungsgemäßen Zentrischspanners;
- Figur 2: eine Einzelteildarstellung von den beweglichen Bauteilen des Zentrischspanners,
- Figur 3: einen Längsschnitt durch den Zentrischspanner gemäß Figur 1 im geöffneten Zustand und;
- Figur 4:: einenLängsschnitt durch den Zentrischspanner gemäß Figur 1 im geschlossen Zustand.

Der in den Figuren gezeigte Zentrischspanner 10 weist ein Gehäuse 12 auf, in dem insgesamt zwei Backen 14 hin zu beziehungsweise weg von der Mittellängsachse 16 in einer senkrecht zur Mittellängsachse 16 verlaufenden Ebene synchron bewegbar sind.

Zum radialen, synchronen Bewegen der Backen 14 ist ein axial verlagerbares Stellglied 18 vorgesehen. Das Stellglied 18 weist einen ersten Abschnitt 20 auf, der mit den Backen 14 ein Getriebe bildet, insbesondere ein Keilhakengetriebe beziehungsweise einen Schrägzug. Hierdurch wird eine Verdrehsicherung des Stellgliedes erreicht. Zudem werden bei axialer Bewegung des Stellglieds 18 die im Gehäuse geführten Backen in linearer Richtung bewegt werden.

Das Stellglied 18 sieht einen zweiten Abschnitt 22 auf, welcher ein umlaufendes Stellgliedgewinde 24 vorsieht.

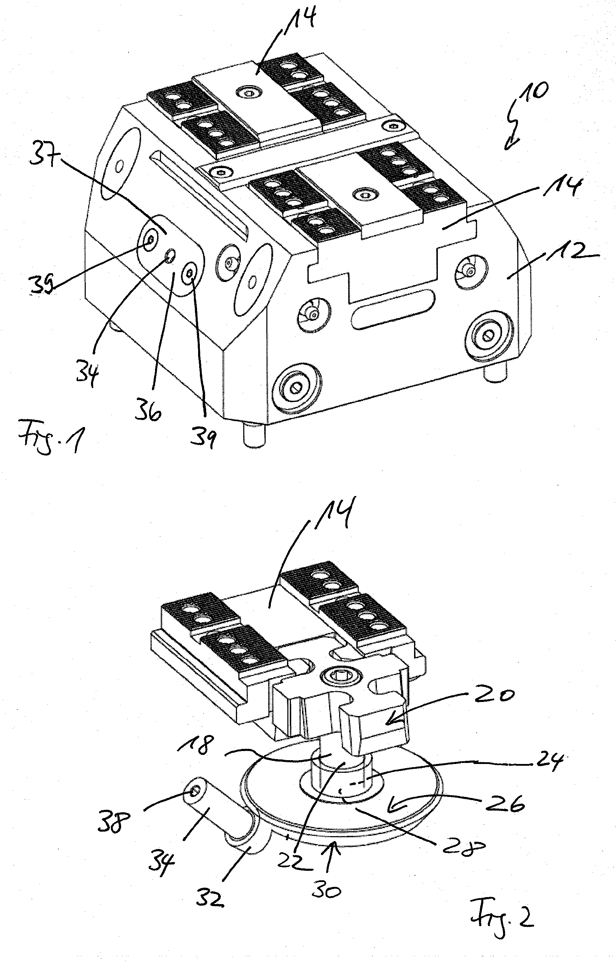

Im Gehäuse 12 ist ferner ein Drehkörper 26 vorgesehen, der um die Mittellängsachse 16 drehbar gelagert ist. Der Drehkörper weist in seinem zentralen Bereich eine Bohrung mit einem als Innengewinde ausgebildeten Drehkörpergewinde 28 auf. Das Drehkörpergewinde 28 wirkt mit dem Stellgliedgewinde 24 derart zusammen, dass beim Verdrehen des Drehkörpers 26 um die Mittellängsachse 16 das Stellglied 18 in axialer Richtung bewegt wird. Der Drehkörper 26 ist dabei als solcher kegelradförmig ausgebildet und weist im Bereich seines Außenumfangs eine Kegelradverzahnung 30 auf. Wie aus Figur 2 deutlich wird, wirkt die Kegelradverzahnung 30 mit einer Ritzelverzahnung 32 eines verdrehbaren Betätigungskörpers 34 zusammen. Durch das Eingreifen der Ritzelverzahnung 32 in die Kegelradverzahnung 30 ist der Drehkörper 26 mit dem Betätigungskörper 34 drehgekoppelt. Anstelle einer Verzahnung zwischen dem Drehkörper 26 und dem Betätigungskörper 34 ist erfindungsgemäß auch denkbar, dass eine Reibkopplung zwischen den beiden Bauteilen vorgesehen ist.

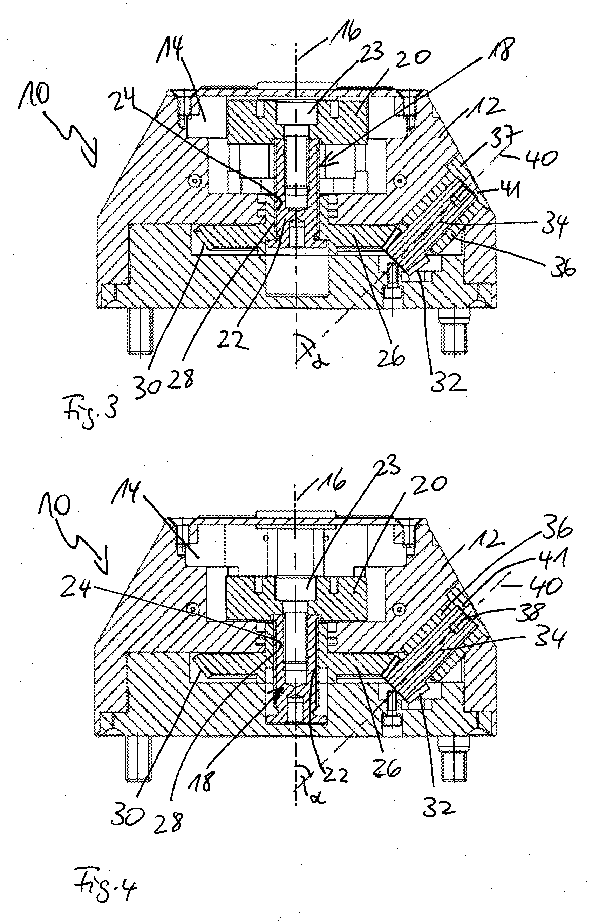

Wie insbesondere aus den Figuren 3 und 4 deutlich wird, sind die beiden Abschnitte 20 und 22 des Stellglieds 18 über eine Verbindungsschraube 23 miteinander verbunden.

Der Betätigungskörper 34 ist als Drehstift ausgebildet und ist in einer Lagerhülse 36 im Gehäuse 12 drehbar gelagert. Die Lagerhülse 36 kann insbesondere einen Kragenabschnitt 37 aufweisen, der mittels Schrauben 39 am Gehäuse 12 befestigt ist. Die Lagerhülse 36 weist zudem einen nach innen zurückversetzten Schulterabschnitt 41 auf, um den Betätigungskörper 34 in axialer Richtung zu sichern.

Auf seiner dem Ritzel 32 abgewandten Seite weist der Betätigungskörper 34 einen Eingriffsabschnitt 38 als Schnittstelle für ein Werkzeug oder für einen beispielsweise manuell betätigbaren Motorschrauber auf. Hierdurch kann der Betätigungskörper 34 auf einfache Art und Weise verdreht werden.

Wird der Betätigungskörper 34 verdreht, so geht aufgrund der Drehkupplung zwischen dem Betätigungskörper 34 und dem Drehkörper 26 eine Verdrehung des Drehkörpers 26 einher. Aufgrund der Verdrehung des Drehkörpers 26 wird dann das nicht drehbar angeordnete Stellglied 18 axial bewegt. Aufgrund der axialen Bewegung des Stellglieds werden dann die Backen 14 zentrisch bewegt.

Durch die Wahl von geeigneten Übersetzungsverhältnissen zwischen dem Betätigungskörper 34 und dem Drehkörper 26 sowie zwischen dem Drehkörper 26 und dem Stellglied 18 sowie zwischen dem Stellglied 18 und den Backen 14 kann erreicht werden, dass hohe Spannkräfte an den Backen wirken, wobei der Betätigungskörper mit geringem Drehmoment verdrehbar ist. Ferner kann eine sehr genaue Reproduzierbarkeit der Spannbacken, beziehungsweise deren Stellung im Gehäuse 12, erreicht werden.

Wie der Figur 3 oder 4 entnommen werden kann, ist denkbar, den Betätigungskörper 34 so anzuordnen, dass seine Drehachse 40 die Mittellängsachse 16 unter einem Winkel α im Bereich von 30° bis 60°, und insbesondere im Bereich von 45°, schneidet.

## Patentansprüche

1. Spanner oder Greifer (10) mit einem entlang einer Mittellängsachse (16) axial verlagerbaren Stellglied (18), welches über ein Getriebe mit wenigstens einer Backe (14) zusammenwirkt, wobei die Backe (14) in einer senkrecht zur Mittellängsachse (16) verlaufenden Ebene in einem Gehäuse (12) verlagerbar ist, wobei das Stellglied (18) ein Stellgliedgewinde (24) umfasst, und wobei ein drehbar gelagerter Drehkörper (26) mit einem zentralen Drehkörpergewinde (28) vorgesehen ist, welches mit dem Stellgliedgewinde (24) zusammenwirkt, **dadurch gekennzeichnet, dass** der Drehköper (26) im Bereich seines Außenumfangs mit dem Außenumfang eines im Gehäuse (12) drehbar gelagerten und manuell oder maschinell verdrehbaren Betätigungskörpers (34) drehgekoppelt ist.

2. Spanner oder Greifer (10) nach Anspruch 1, **dadurch gekennzeichnet, dass** der Betätigungskörper (34) einen betätigbaren Eingriffsabschnitt (38) und einen mit dem Drehkörper (26) zusammenwirkenden Koppelabschnitt (32) aufweist.

3. Spanner oder Greifer (10) nach Anspruch 1 oder 2, **dadurch gekennzeichnet, dass** der Betätigungskörper (34) als Drehstift ausgebildet ist.

4. Spanner oder Greifer (10) nach einem der vorhergehenden Ansprüche, **dadurch gekennzeichnet, dass** der Betätigungskörper (34) in einer Lagerhülse (36) drehbar gelagert angeordnet ist.

5. Spanner oder Greifer (10) nach Anspruch 4, **dadurch gekennzeichnet, dass** die Lagerhülse (36) einen Kragenabschnitt (37) aufweist, der vorzugsweise mittels Schrauben (39) am Gehäuse (12) befestigt ist.

6. Spanner oder Greifer (10) nach Anspruch 4 oder 5, **dadurch gekennzeichnet, dass** die Lagerhülse (36) zur axialen Sicherung des Betätigungskörper (34), insbesondere im Bereich des Kragenabschnitts (37), einen nach radial innen zurückversetzten Schulterabschnitt (41) aufweist.

7. Spanner oder Greifer (10) nach einem der vorhergehenden Ansprüche, **dadurch gekennzeichnet, dass** der Eingriffsabschnitt (38) als Schnittstelle für ein Werkzeug oder manuell betätigbaren Motorschrauber ausgebildet ist.

8. Spanner oder Greifer (10) nach einem der vorhergehenden Ansprüche, **dadurch gekennzeichnet, dass** der Drehköper (26) eine Reibfläche aufweist und dass der Betätigungskörper (34) eine mit der Reibfläche drehgekoppelte Gegenreibfläche aufweist.

9. Spanner oder Greifer (10) nach einem der Ansprüche 1 bis 8, **dadurch gekennzeichnet, dass** der Drehköper (26) eine Verzahnung (30) und der Betätigungskörper (34) eine mit der Verzahnung (30) im Eingriff stehende Gegenverzahnung (32) aufweist.

10. Spanner oder Greifer (10) nach einem der Ansprüche 1 bis 7 oder 9, **dadurch gekennzeichnet, dass** der Drehkörper (26) an seinem Außenumfang (30) kegelrad- oder kronenradförmig ausgebildet ist und dass der Betätigungskörper (34) einen Ritzelabschnitt (32) zum Eingriff des kegelrad- oder kronenradförmig ausgebildeten Außenumfangs aufweist.

11. Spanner oder Greifer (10) nach einem der vorhergehenden Ansprüche, **dadurch gekennzeichnet, dass** die Übersetzung zwischen Betätigungskörper (34) und Drehköper (26) und/oder zwischen Drehköper (26) und Stellglied (18) und/oder zwischen dem Stellglied (18) und dem wenigstens einen Backen (14) derart gewählt ist, dass zur Erzielung großer Spannkräfte an dem wenigstens einen Backen (14) der Betätigungskörper (34) mit einem geringen Drehmoment verdrehbar ist.

12. Spanner oder Greifer (10) nach einem der vorhergehenden Ansprüche, **dadurch gekennzeichnet, dass** das Stellgliedgewinde (24) als Außengewinde ausgebildet ist und dass das Drehkörpergewinde (28) als um die Mittellängsachse (16) des Stellgliedgewindes (24) verlaufendes Innengewinde ausgebildet ist.

## Claims

1. Clamp or gripper (10) comprising an actuator (18), which is axially movable along a middle longitudinal axis (16) and cooperates with at least one jaw (14) by means of a gearbox, the jaw (14) being movable in a housing (12) in a plane which runs perpendicular to the middle longitudinal axis (16), the actuator (18) comprising an actuator thread (24), and a rotatably supported rotating body (26) being provided with a central rotating-body thread (28) which cooperates with the actuator thread (24), **characterized in that**, in an area of the external circumference thereof, the rotating body (26) is rotatably coupled with the external circumference of a manually rotatable or machine-rotatable actuating body (34) which is rotatably supported in the housing (12).

2. Clamp or gripper (10) according to claim 1, **characterized in that** the actuating body (34) comprises an actuatable engagement portion (38) and a coupling portion (32) which cooperates with the rotating body (26).

3. Clamp or gripper (10) according to claim 1 or claim 2, **characterized in that** the actuating body (34) is in the form of a rotating pin.

4. Clamp or gripper (10) according to any of the preceding claims, **characterized in that** the actuating body (34) is arranged in a bearing sleeve (36) in a rotatably supported manner.

5. Clamp or gripper (10) according to claim 4, **characterized in that** the bearing sleeve (36) comprises a collar portion (37) which is fastened to the housing (12) preferably by means of screws (39).

6. Clamp or gripper (10) according to claim 4 or claim 5, **characterized in that** the bearing sleeve (36) comprises a shoulder portion (41), which is radially inwardly set back, for axially securing the actuating body (34), in particular in the region of the collar portion (37).

7. Clamp or gripper (10) according to any of the preceding claims, **characterized in that** the engagement portion (38) is formed as an interface for a tool or manually actuatable motor-driven screwdriver.

8. Clamp or gripper (10) according to any of the preceding claims, **characterized in that** the rotating body (26) comprises a friction surface, and **in that** the actuating body (34) comprises a counter-friction surface which is rotationally coupled to the friction surface.

9. Clamp or gripper (10) according to any of claims 1 to 8, **characterized in that** the rotating body (26) comprises gearing (30) and the actuating body (34) comprises counter-gearing (32) which is in engagement with the gearing (30).

10. Clamp or gripper (10) according to any of claims 1 to 7 or 9, **characterized in that**, at its external circumference (30), the rotating body (26) is in the form of a bevel gear or a crown gear, and **in that** the actuating body (34) comprises a pinion-gear portion (32) for engagement with the external circumference in the form of a bevel gear or a crown gear.

11. Clamp or gripper (10) according to any of the preceding claims, **characterized in that** the gear ratio between the actuating body (34) and the rotating body (26) and/or between the rotating body (26) and the actuator (18) and/or between the actuator (18) and the at least one jaw (14) is selected such that, in order to achieve high clamping forces by the at least one jaw (14), the actuating body (34) can be rotated at a low torque.

12. Clamp or gripper (10) according to any of the preceding claims, **characterized in that** the actuator thread (24) is in the form of an external thread, and **in that** the rotating-body thread (28) is in the form of an internal thread which extends around the middle longitudinal axis (16) of the actuator thread (24).

## Revendications

1. Tendeur ou poignée (10) comprenant un actionneur (18) qui est mobile axialement le long d'un axe longitudinal médian (16) et qui coopère avec au moins une mâchoire (14) par l'intermédiaire d'une transmission, la mâchoire (14) étant mobile dans un logement (12) dans un plan s'étendant perpendiculairement à l'axe longitudinal médian (16), l'actionneur (18) comportant un filetage (24), et un corps rotatif (26) monté en rotation étant pourvu d'un filetage (28) central, lequel coopère avec le filetage (24) de l'actionneur, **caractérisé en ce que** le corps rotatif (26) est accouplé en rotation, dans la zone de sa périphérique extérieure, à la périphérie extérieure d'un corps d'actionnement (34) monté en rotation dans le logement (12) et entraîné en rotation de façon manuelle ou mécanisée.

2. Tendeur ou poignée (10) selon la revendication 1, caractérisé(e) en ce que le corps d'actionnement (34) comprend une section de contact (38) pouvant être actionnée et une section d'accouplement (32) coopérant avec le corps rotatif (26).

3. Tendeur ou poignée (10) selon la revendication 1 ou 2, caractérisé(e) en ce que le corps d'actionnement (34) est réalisé sous la forme d'une tige rotative.

4. Tendeur ou poignée (10) selon l'une quelconque des revendications précédentes, caractérisé(e) en ce que le corps d'actionnement (34) est monté en rotation dans une douille de palier (36).

5. Tendeur ou poignée (10) selon la revendication 4, caractérisé (e) en ce que la douille de palier (36) comprend une section formant collerette (37), laquelle est fixée sur le logement (12) de préférence au moyen de vis (39).

6. Tendeur ou poignée (10) selon la revendication 4 ou 5, caractérisé (e) en ce que la douille de palier (36) présente, pour le blocage axial du corps d'actionnement (34), en particulier dans la zone de la section formant collerette (37), une section d'épaulement (41) en retrait radialement vers l'intérieur.

7. Tendeur ou poignée (10) selon l'une quelconque des revendications précédentes, caractérisé(e) en ce que la section de contact (38) est réalisée sous la forme d'une interface pour un outil ou une visseuse motorisée pouvant être actionnée manuellement.

8. Tendeur ou poignée (10) selon l'une quelconque des revendications précédentes, caractérisé(e) en ce que le corps rotatif (26) présente une surface de friction et en ce que le corps d'actionnement (34) présente une surface de friction complémentaire accouplée en rotation à la surface de friction.

9. Tendeur ou poignée (10) selon l'une quelconque des revendications 1 à 8, caractérisé(e) en ce que le corps rotatif (26) présente une denture (30) et le corps d'actionnement (34) présente une denture complémentaire (32) en contact avec la denture (30).

10. Tendeur ou poignée (10) selon l'une quelconque des revendications 1 à 7 ou 9, caractérisé (e) en ce que le corps rotatif (26) est réalisé en forme de roue conique ou de couronne dentée sur sa périphérie extérieure (30) et en ce que le corps d'actionnement (34) présente une section formant pignon (32) destinée à être en contact avec la périphérie extérieure réalisée sous la forme d'une roue conique ou d'une couronne dentée.

11. Tendeur ou poignée (10) selon l'une quelconque des revendications précédentes, caractérisé(e) en ce que la transmission entre le corps d'actionnement (34) et le corps rotatif (26) et/ou entre le corps rotatif (26) et l'actionneur (18) et/ou entre l'actionneur (18) et la ou les mâchoires (14) est sélectionnée de telle manière que pour obtenir des forces de serrage plus importantes sur la ou les mâchoires (14), le corps d'actionnement (34) peut être amené en rotation avec un couple faible.

12. Tendeur ou poignée (10) selon l'une quelconque des revendications précédentes, caractérisé(e) en ce que le filetage (24) de l'actionneur est réalisé sous la forme d'un filetage extérieur et en ce que le filetage (28) du corps rotatif est réalisé sous la forme d'un filetage intérieur s'étendant autour de l'axe longitudinal médian (16) du filetage (24) de l'actionneur.
